# EUROPÄISCHE PATENTSCHRIFT

(11) **EP 1 628 066 B1**
(45) Veröffentlichungstag und Bekanntmachung des Hinweises auf die Patenterteilung: **03.12.2008**
(21) Anmeldenummer: 05016997.8
(22) Anmeldetag: 04.08.2005
(51) Int. Cl.: F16L 29/00, F16L 29/04, F16L 37/32, F16L 37/373, F16L 39/00

(54) **Schnellkupplung für kryogene Medien**
Quick-acting coupling for cryogenic media
Raccord rapide pour fluides cryogeniques

(30) Priorität: 20.08.2004 DE 102004040519
(43) Veröffentlichungstag der Anmeldung: 22.02.2006
(73) Patentinhaber: Linde Aktiengesellschaft, 80807 München (DE); Carl Kurt Walther GmbH & Co. KG, 42781 Haan (DE)
(72) Erfinder: Kleinebeckel, Harald, 50735 Köln (DE); Köpp, Andreas, 41542 Dormagen (DE); Reese, Wilfried-Henning, 85716 Unterschleissheim (DE); Ricken, Norbert, 44979 Bochum (DE)

(56) Entgegenhaltungen:
- WO-A-03/067140
- DE-A1- 4 104 711
- US-A- 3 276 474
- US-A- 4 664 149

## Beschreibung

Die Erfindung betrifft eine Kupplung für vakuumisolierte Rohr- oder Schlauchleitungen, die zur Führung eines oder mehrerer kryogener Medien vorgesehen sind, bestehend aus
- einem ein- oder mehradrigen Kupplungsstecker, dem bzw. von dem mittels einer ein- oder mehradrigen Zuführleitung oder dem bzw. von dem mittels mehrerer Zuführleitungen das oder die kryogenen Medien zugeführt bzw. abgezogen werden, und
- einer zu dem Kupplungsstecker korrespondierende Kupplungsdose, wobei im zusammengekuppelten Zustand ein Leitungsrohr des Kupplungssteckers, das in axialer Richtung beweglich zum Kupplungsstecker ausgebildet ist, sich über die Trennebene hinaus in die Kupplungsdose hinein erstreckt, wobei
- Kupplungsstecker und Kupplungsdose unmittelbar benachbart der Trennebene jeweils einen mit einer Durchgangsbohrung versehenen Kugelhahn aufweisen.

Die Erfindung betrifft ferner die Verwendung einer derartigen Kupplung.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt bzw. verwendet; also z. B. GH₂ bzw. LH₂ für gasförmigen bzw. flüssigen Wasserstoff. Des Weiteren werden die Begriffe "CNG" und "LNG" für komprimiertes bzw. verflüssigtes Erdgas verwendet.

Insbesondere Wasserstoff und Erdgas gewinnen gegenwärtig durch den steigenden Energiebedarf und das gestiegene Umweltbewusstsein als Energieträger zunehmend an Bedeutung. So werden bereits Lastkraftwagen, Busse, Personenkraftwagen und Lokomotiven mittels mit Erdgas- oder Wasserstoff-betriebenen Motoren sowie mittels Kombinationen aus Brennstoffzelle und Elektromotor angetrieben. Darüber hinaus sind erste Versuche im Gange, Flugzeuge mit den genannten Medien anzutreiben.

Die Speicherung des Wasserstoffs oder Erdgases "an Bord" der oben genannten Verkehrsmittel ist dabei in flüssiger Form am sinnvollsten. Zwar müssen der Wasserstoff und LNG dazu auf etwa 25 K bzw. 112 K abgekühlt und auf dieser Temperatur gehalten werden - was nur durch entsprechende Isoliermaßnahmen an den Speicherbehältern bzw. -tanks realisiert werden kann -, doch ist eine Speicherung in gasförmigem Zustand aufgrund der geringen Dichte von GH₂ und CNG in der Regel in den oben genannten Verkehrsmitteln ungünstiger, da die Speicherung hierbei in großvolumigen und schweren Speicherbehältern bei hohen Drücken erfolgen muss.

Die Betankung der vorgenannten Verkehrsmittel bzw. Fahrzeuge erfolgt mittels gattungsgemäßer Kupplungen, wie sie beispielsweise aus der DE-A 41 04 711 bekannt sind. Das Prinzip einer derartigen Kupplung basiert auf einem System, bei welchem zwei Kugelhähne - einer auf der Kupplungssteckerseite und einer auf der Kupplungsdosenseite - miteinander verflanscht werden. Anschließend fährt von der Steckerseite her durch die Durchgangsbohrungen der Kugelhähne ein vakuumisoliertes Füllrohr hindurch, durch welches das (kryogene) Medium zur Kupplungsdosenseite strömt. Nach dem Füllvorgang fährt der Stecker zurück, und die Kugelhähne werden wieder geschlossen. Anschließend wird die Verflanschung der Kugelhähne getrennt. Eine derartige Betankungskupplung ermöglicht ein Überfüllen von (kryogenen) Flüssigkeiten, ohne dass äußerlich eine Abkühlung der sichtbaren Komponenten zu erkennen ist.

Bei der Anwendung des vorbeschriebenen Prinzips ist es notwendig, den auf der Steckerseite sowie den auf der Dosenseite befindlichen Kugelhahn durch eine Drehung der Kugeln zu öffnen oder zu schließen. Dieser Betätigungsvorgang wird bisher im Normalfall durch einen Handhebel durchgeführt, welcher-wie in üblicher Weise für Kugelhähne verwendet - die steckerseitige Kugel durch eine 90°-Drehung öffnet. Durch einen Zahnradantrieb, der bei dem Verbinden der Kupplungshälften in Eingriff kommt, wird gleichzeitig der dosenseitige Kugelhahn geöffnet bzw. geschlossen. Im Falle so genannter Roboteranwendungen - wie sie beispielsweise bei vollautomatisierten Tankstellen realisiert werden - besteht die Möglichkeit, den steckerseitigen Kugelhahn mittels eines hydraulischen und/oder pneumatischen Antriebes zu betätigen. Der dosenseitige Kugelhahn wird hierbei in gleicher Weise wie bei der Handbetätigung über ein Zahnrad, das während des Zusammenführens der Kupplungsflansche in Eingriff kommt, geöffnet oder geschlossen.

Nachteilig bei dem beschriebenen Verfahren zum Verbinden der Kugelhahnflansche ist jedoch, dass aufgrund der geometrischen Gegebenheiten die Zahnräder in Eingriff kommen müssen, bevor sich die Flansche selbst berühren. Ein exaktes Ineinandergreifen der Zahnradzähne während des Andock- bzw. Verbindungsvorganges erfordert jedoch eine sehr genaue Achsführung hinsichtlich radialer Abweichung und Winkelversatz des steckerseitigen Kupplungsteiles relativ zu dem dosenseitigen Kupplungsteil. Aufgrund der im Regelfall begrenzten Platzverhältnisse lässt sich eine Führung, beispielsweise eine Konusführung, in der erforderlichen Form nicht realisieren. Ein erfolgreicher Andockvorgang ist daher vom Geschick des Bedienpersonals oder von der Sensorik und der exakten Steuerung des Betankungsroboters abhängig.

Zusätzlich müssen während des Andockvorganges die Verdrehachsen der Kugelhähne auf einer Ebene liegen, damit die Zähne des Zahnradantriebes ebenfalls in einer Ebene in Eingriff sind. Ferner muss gewährleistet sein, dass während des Andockens der Zahnkopf der einen Seite in einen Zahnfuß der Gegenseite greift. Falls zwei Zahnköpfe voreinander stoßen, ist ein Verbinden der Flansche nicht möglich. Darüber hinaus sind die Zahnräder durch ihre exponierte Anordnung einer starken Verschmutzung durch Witterungseinflüsse ausgesetzt. Durch die engen Toleranzen, welche bei einer Verzahnung vorliegen, kann eine Verschmutzung zum Verklemmen der Zahnräder und damit zu erhöhtem Verschleiß an ihnen führen.

Aufgabe der vorliegenden Erfindung ist es, eine gattungsgemäße Kupplung für vakuumisolierte Rohr- oder Schlauchleitungen anzugeben, die die vorgenannten Nachteile vermeidet.

Zur Lösung dieser Aufgabe wird eine gattungsgemäße Kupplung für vakuumisolierte Rohr- oder Schlauchleitungen vorgeschlagen, die dadurch gekennzeichnet, dass
- Kupplungsstecker und Kupplungsdose jeweils eine axial verschiebbar gelagerte Verriegelungshülse aufweisen,
- die Verriegelungshülsen bei der Zusammenführung von Kupplungsstecker und Kupplungsdose zum Eingriff kommen, und
- die Verriegelungshülsen mittels Schiebestifte mit den Kugelhähnen derart verbunden sind, dass die Kugelhähne bei einer Verschiebung der Verriegelungshülsen aus ihrer Zu-Position in ihre Auf-Position und umgekehrt verdreht werden.

Unter den Begriffen "Auf-Position" sowie "Zu-Position" seien diejenigen Positionen der Kugelhähne zu verstehen, bei denen das Leitungsrohr des Kupplungssteckers in die Kupplungsdose eingeschoben ("Auf-Position") bzw. nicht eingeschoben ("Zu-Position") werden kann.

Im Gegensatz zu den bekannten Kupplungskonstruktionen können Kupplungsstecker und Kupplungsdose nunmehr ohne Restriktionen durch exakte Achsführung, Achsausrichtung und Ineinandergreifen von Zahnradpaaren miteinander verbunden werden.

Die erfindungsgemäße Kupplung weiterbildend wird vorgeschlagen, dass die Verriegelungshülsen konzentrisch zu dem steckerseitigen Leitungsrohr angeordnet sind.

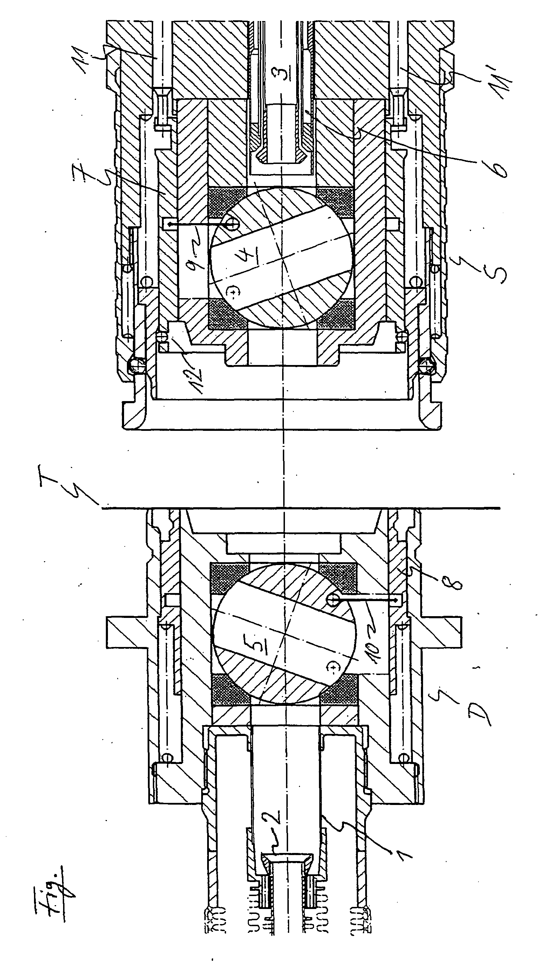

Die erfindungsgemäße Kupplung sowie weitere Ausgestaltungen derselben, die Gegenstände der abhängigen Patentansprüche sind, seien im Folgenden anhand des in der Figur dargestellten Ausführungsbeispieles näher erläutert.

Hierbei zeigt die Figur eine seitliche Schnittdarstellung der Kupplung in entkuppeltem Zustand, bestehend aus dem Kupplungsstecker S sowie der Kupplungsdose D, die an der Trennebene T miteinander verbunden werden.

Die Kupplungsdose D weist eine Außenwandung 1 auf, in die das Leitungsrohr 3 des Kupplungssteckers S - bei geöffneten Kugelhähnen 4 und 5 - während des Betankungsvorganges bis zu einem Anschlag 2 eingeschoben wird. Kupplungsstecker S und Kupplungsdose D weisen je einen Kugelhahn 4 bzw. 5 auf, wobei deren Durchgangsbohrungen zur Aufnahme des Leitungsrohres 3 des Kupplungssteckers S vorgesehen sind. Das axial verschiebbare Leitungsrohr 3 ist innerhalb des Kupplungssteckers S in einem Führungsrohr 6 angeordnet.

Das Verschieben des Leitungsrohres 3 kann mittels pneumatisch, hydraulisch und/oder mechanisch wirkender Vorrichtungen erfolgen. Im Regelfall wird das Einschieben des Leitungsrohres 3 in die Kupplungsdose D mit dem Verklammern von Kupplungsstecker S und Kupplungsdose D sowie dem Öffnen der Kugelhähne 4 und 5 gekoppelt sein, wodurch die Bedienbarkeit der Kupplung vereinfacht wird.

Erfindungsgemäß weisen sowohl der Kupplungsstecker S als auch die Kupplungsdose D jeweils eine axial verschiebbar gelagerte Verriegelungshülse 7 bzw. 8 auf. Die Verriegelungshülsen 7 und 8 kommen bei der Zusammenführung von Kupplungsstecker S und Kupplungsdose D zum Eingriff.

Die erfindungsgemäße Kupplung weiterbildend wird vorgeschlagen, dass die Verriegelungshülsen 7 und 8 über eine Kugelverriegelung 12 verbindbar sind. Über die Kugelverriegelung 12 werden die Verriegelungshülsen 7 und 8 zwangsweise mechanisch gekoppelt, so dass keine zusätzliche Hilfsenergie, beispielsweise in Form einer Feder erforderlich ist.

Neben dieser Kugelverriegelung 12 sind weitere Verriegelungsmöglichkeiten, wie beispielsweise, eine Spannzangen- oder Segmentverriegelung realisierbar.

Zumindest die steckerseitige Verriegelungshülse 7 ist mittels eines pneumatischen, hydraulischen und/oder mechanischen Antriebes, bei dem es sich vorzugsweise um einen Axialantrieb handelt, beweg- bzw. verschiebbar. Hierbei können der Antrieb der Verriegelungshülse 7 und der Antrieb des steckerseitigen Leitungsrohres 3 getrennt oder als eine gemeinsame Antriebsvorrichtung ausgeführt werden. Nach erfolgter Verriegelung von Kupplungsstecker S und Kupplungsdose D wird die steckerseitige Verriegelungshülse 7 durch die Antriebsstangen 11 und 11' und damit zwangsläufig auch die dosenseitige Verriegelungshülse 8 verschoben.

Da die Verriegelungshülsen 7 und 8 mittels Schiebestifte 9 bzw. 10 mit den Kugelhähnen 4 bzw. 5 derart verbunden sind, dass die Kugelhähne 4 und 5 aus ihrer Zu-Position in ihre Auf-Position und umgekehrt verdreht werden, erfolgt bei einem Verschieben der Verriegelungshülsen 7 und 8 in Richtung des Kupplungsdose D ein Öffnen der Kugelhähne 4 und 5 - das steckerseitige Leitungsrohr 3 kann sodann in die Kupplungsdose D bzw. deren Außenwandung 1 bis zum Anschlag 2 eingeführt werden -, während bei einem Verschieben der Verriegelungshülsen 7 und 8 in Richtung des Kupplungssteckers S die Kugelhähne 4 und 5 (wieder) geschlossen bzw. in ihre Zu-Position verdreht werden. Dieses Verdrehen der Kugelhähne 4 und 5 in ihre Zu-Position kann selbstverständlich erst dann erfolgen, wenn der Betankungsvorgang beendet und das steckerseitige Leitungsrohr 3 wieder hinter den steckerseitigen Kugelhahn 4 zurückgezogen wurde.

Entsprechend einer vorteilhaften Ausgestaltung der erfindungsgemäßen Kupplung kann die dosenseitige Verriegelungshülse 8 derart federbelastet ausgebildet sein, dass sie alleine durch die Federkraft in eine Position verfahren wird, in der sich der ihr zugeordnete Kugelhahn 5 in seiner Zu-Position befindet.

Kommt die vorgenannte Ausgestaltung der erfindungsgemäßen Kupplung zur Anwendung, ohne dass eine, wie vorstehend beschriebene Verriegelung zwischen den Verriegelungshülsen 7 und 8 realisiert wird, besteht jedoch immer die Möglichkeit, dass der dosenseitige Kugelhahn 5 beim Abkuppeln des Kupplungssteckers S von der Kupplungsdose D nicht geschlossen ist, was im Falle der Betankung eines Speicherbehälters mit einem kryogenen Medium zu einem unerwünschten Wärmeeinfall in den Speicherbehälter und damit zu einem plötzlichen Verdampfen des kryogenen Mediums führen würde. Nur dann, wenn auch eine, wie vorstehend beschriebene, mechanische Verriegelung zwischen den Verriegelungshülsen 7 und 8 realisiert wird, kann sichergestellt werden, dass beim Abkuppeln des Kupplungssteckers S zwangsläufig ein Schließen des dosenseitigen Kugelhahns 5 erfolgt.

Die erfindungsgemäße Kupplung für vakuumisolierte Rohr- oder Schlauchleitungen eignet sich insbesondere als Betankungskupplung für Fahrzeuge jeder Art, insbesondere für Kraftfahrzeuge, die mit flüssigem Wasserstoff und/oder verflüssigtem Erdgas betrieben werden und bei denen der fahrzeugseitige Speicherbehälter mit flüssigem Wasserstoff oder LNG betankt wird.

Die erfindungsgemäße Kupplung ermöglicht somit die nachfolgend stichpunktartig aufgeführten Vorteile:
- ausschließlich axiale Bewegung erforderlich, die mechanisch, pneumatisch oder hydraulisch ausgeführt werden kann,
- Einfache und robuste Konstruktion, somit lange Lebensdauer,
- Alle beweglichen Bauteile können innenliegend angeordnet werden,
- Geräuscharme Funktion,
- Schmutzunempfindlich, da über die (schiebbaren) Verriegelungshülsen, eventuelle Verschmutzungen abgeschoben werden,
- Hervorragende Funktionsfähigkeit und Reproduzierbarkeit durch eine, mechanische Verbindung zwischen den Verriegelungshülsen, Schiebestiften und Kugelhähnen,
- Rotationssymmetrische Ausführung der Bauteile, so dass der Andockvorgang in allen radialen Winkelstellungen zwischen der Stecker- und Dosenseite sicher erfolgen kann; ein erfolgreicher Andockvorgang ist daher unabhängig vom Geschick des Bedienpersonals oder der Sensorik und der exakten Steuerung des Betankungsroboters
- Serientauglichkeit.

## Patentansprüche

1. Kupplung für vakuumisolierte Rohr- oder Schlauchleitungen, die zur Führung eines oder mehrerer kryogener Medien vorgesehen sind, bestehend aus
- einem ein- oder mehradrigen Kupplungsstecker (S), dem bzw. von dem mittels einer ein- oder mehradrigen Zuführleitung (3) oder dem bzw. von dem mittels mehrerer Zuführleitungen (3) das oder die kryogenen Medien zugeführt bzw. abgezogen werden, und
- einer zu dem Kupplungsstecker (S) korrespondierende Kupplungsdose (D), wobei im zusammengekuppelten Zustand ein Leitungsrohr (3) des Kupplungssteckers (S), das in axialer Richtung beweglich zum Kupplungsstecker (S) ausgebildet ist, sich über die Trennebene (T) hinaus in die Kupplungsdose (D) hinein erstreckt, wobei
- Kupplungsstecker (S) und Kupplungsdose (D) unmittelbar benachbart der Trennebene (T) jeweils einen mit einer Durchgangsbohrung versehenen Kugelhahn (4, 5) aufweisen,
**dadurch gekennzeichnet, dass**
- Kupplungsstecker (S) und Kupplungsdose (D) jeweils eine axial verschiebbar gelagerte Verriegelungshülse (7, 8) aufweisen,
- die Verriegelungshülsen (7, 8) bei der Zusammenführung von Kupplungsstecker (S) und Kupplungsdose (D) zum Eingriff kommen, und
- die Verriegelungshülsen (7, 8) mittels Schiebestifte (9, 10) mit den Kugelhähnen (4, 5) derart verbunden sind, dass die Kugelhähne (4, 5) bei einer Verschiebung der Verriegelungshülsen (7, 8) aus ihrer Zu-Position in ihre Auf-Position und umgekehrt verdreht werden.

2. Kupplung nach Anspruch 1, **dadurch gekennzeichnet, dass** die Verriegelungshülsen (7, 8) konzentrisch zu dem steckerseitigen Leitungsrohr (3) angeordnet sind.

3. Kupplung nach Anspruch 1 oder 2, **dadurch gekennzeichnet, dass** zumindest die steckerseitige Verriegelungshülse (7) mittels eines pneumatischen, hydraulischen und/oder mechanischen Antriebes, vorzugsweise Axialantriebes, bewegbar ist.

4. Kupplung nach Anspruch 3, wobei das steckerseitige Leitungsrohr mittels eines pneumatischen, hydraulischen und/oder mechanischen Antriebes verfahrbar ist, **dadurch gekennzeichnet, dass** der Antrieb der steckerseitigen Verriegelungshülse (7) und der Antrieb des steckerseitigen Leitungsrohres (3) getrennt oder als eine gemeinsame Antriebsvorrichtung ausgeführt sind.

5. Kupplung nach einem der vorhergehenden Ansprüche 1 bis 4, **dadurch gekennzeichnet, dass** die dosenseitige Verriegelungshülse (8) derart federbelastet ausgebildet ist, dass sie alleine durch die Federkraft in eine Position verfahren wird, in der sich der ihr zugeordnete Kugelhahn (5) in seiner Zu-Position befindet.

6. Kupplung nach einem der vorhergehenden Ansprüche 1 bis 5, **dadurch gekennzeichnet, dass** die Verriegelungshülsen (7, 8) über eine Spannzangen-, eine Segment- und/oder Kugelverriegelung (12) verbindbar sind.

7. Verwendung einer Kupplung für vakuumisolierte Rohr- oder Schlauchleitungen nach einem der vorhergehenden Ansprüche als Betankungskupplung für Fahrzeuge jeder Art, insbesondere für Kraftfahrzeuge, die mit flüssigem Wasserstoff und/oder verflüssigtem Erdgas betrieben werden.

## Claims

1. Coupling for vacuum-insulated pipelines or hoselines which are provided for routing one or more cryogenic media, which consists of
- a single-conductor or multi-conductor coupling plug (S) to which and from which the cryogenic medium or media are respectively supplied and drawn off by means of a single-conductor or multi-conductor supply line (3) or by means of a plurality of supply lines (3), and
- a coupling socket (D) matching the coupling plug (S), in the coupled-together state a line pipe (3) of the coupling plug (S) extending beyond the parting plane (T) into the coupling socket (D), the said line pipe being designed to be movable in the axial direction with respect to the coupling plug (S),
- the coupling plug (S) and coupling socket (D) have in each case, directly adjacently to the parting plane (T), a ball valve (4, 5) provided with a through-bore,
**characterized in that**
- the coupling plug (S) and coupling socket (D) have in each case a locking sleeve (7, 8) mounted axially displaceably,
- the locking sleeves (7, 8) come into engagement when the coupling plug (S) and coupling socket (D) are brought together, and
- the locking sleeves (7, 8) are connected to the ball valves (4, 5) by means of sliding pins (9, 10) in such a way that, in the event of a displacement of the locking sleeves (7, 8), the ball valves (4, 5) are rotated out of their shut position into their open position, and vice versa.

2. Coupling according to Claim 1, **characterized in that** the locking sleeves (7, 8) are arranged concentrically with respect to the plug-side line pipe (3).

3. Coupling according to Claim 1 or 2, **characterized in that** at least the plug-side locking sleeve (7) can be moved by means of a pneumatic, hydraulic and/or mechanical drive, preferably axial drive.

4. Coupling according to Claim 3, the plug-side line pipe being movable by means of a pneumatic, hydraulic and/or mechanical drive, **characterized in that** the drive of the plug-side locking sleeve (7) and the drive of the plug-side line pipe (3) are formed separately or as a common drive device.

5. Coupling according to one of the preceding Claims 1 to 4, **characterized in that** the socket-side locking sleeve (8) is of spring-loaded design such that it is moved solely by spring force into a position in which the ball valve (5) assigned to it is in its shut position.

6. Coupling according to one of the preceding Claims 1 to 5, **characterized in that** the locking sleeves (7, 8) can be connected via a collet-chuck, segmental and/or ball locking device (12).

7. Use of a coupling for vacuum-insulated pipelines or hoselines according to one of the preceding claims as a tank-filling coupling for vehicles of any type, in particular for motor vehicles, which are operated with liquid hydrogen and/or liquefied natural gas.

## Revendications

1. Raccord pour conduites de tubes ou de tuyaux isolées sous vide, qui sont prévues pour guider un ou plusieurs fluides cryogéniques, comprenant :
- une fiche de raccord (S) à un ou plusieurs brins, à laquelle ou depuis laquelle le ou les fluides cryogéniques sont acheminés ou évacués au moins d'une conduite d'alimentation à un ou plusieurs brins (3) ou au moyen de plusieurs conduites d'alimentation (3) et
- une prise de raccord (D) correspondant à la fiche de raccord (S), un tube de conduite (3) de la fiche de raccord (S), réalisé de manière déplaçable dans la direction axiale par rapport à la fiche de raccord (S), s'étendant dans l'état accouplé au-delà du plan de séparation (T) dans la prise de raccord (D),
- la fiche de raccord (S) et la prise de raccord (D) présentant, directement à côté du plan de séparation (T), à chaque fois un robinet à boisseau sphérique (4, 5) pourvu d'un alésage traversant,
**caractérisé en ce que**
- la fiche de raccord (S) et la prise de raccord (D) présentent chacune une douille de verrouillage (7, 8) montée de manière déplaçable axialement,
- les douilles de verrouillage (7, 8) viennent en prise, lors de l'assemblage de la fiche de raccord (S) et de la prise de raccord (D), et
- les douilles de verrouillage (7, 8) sont connectées aux robinets à boisseaux sphériques (4, 5) au moyen de broches coulissantes (9, 10) de telle sorte que les robinets à boisseaux sphériques (4, 5) soient tournés en cas de coulissement des douilles de verrouillage (7, 8) hors de leur position fermée dans leur position ouverte et inversement.

2. Raccord selon la revendication 1, **caractérisé en ce que** les douilles de verrouillage (7, 8) sont disposées concentriquement au tube de conduite (3) du côté de la fiche.

3. Raccord selon la revendication 1 ou 2, **caractérisé en ce qu'**au moins la douille de verrouillage (7) du côté de la fiche peut être déplacée au moyen d'un entraînement pneumatique, hydraulique et/ou mécanique, de préférence axial.

4. Raccord selon la revendication 3, dans lequel le tube de conduite du côté de la fiche peut être déplacé au moyen d'un entraînement pneumatique, hydraulique et/ou mécanique, **caractérisé en ce que** l'entraînement de la douille de verrouillage (7) du côté de la fiche et l'entraînement du tube de conduite (3) du côté de la fiche sont effectués séparément ou sous forme d'un dispositif d'entraînement commun.

5. Raccord selon l'une quelconque des revendications précédentes 1 à 4, **caractérisé en ce que** la douille de verrouillage (8) du côté de la prise est sollicitée par ressort de telle sorte qu'elle soit déplacée par la force du ressort dans une position dans laquelle le robinet à boisseau sphérique (5) qui lui est affecté se trouve dans sa position fermée.

6. Raccord selon l'une quelconque des revendications précédentes 1 à 5, **caractérisé en ce que** les douilles de verrouillage (7, 8) peuvent être connectées par le biais d'un verrouillage à pinces de serrage, à segments et/ou à billes (12).

7. Utilisation d'un raccord pour des conduites de tubes ou de tuyaux isolées sous vide selon l'une quelconque des revendications précédentes, en tant que raccord de remplissage pour des véhicules de tous types, en particulier pour des véhicules automobiles, qui fonctionnent à l'hydrogène et/ou au gaz naturel liquéfié.
